# EUROPEAN PATENT APPLICATION

(11) **EP 2 908 235 A1**
(43) Date of publication of application: **19.08.2015**
(21) Application number: 13845123.2
(22) Date of filing: 29.08.2013
(51) Int. Cl.: G06F 3/0481

(54) **LINK DISPLAY METHOD AND DEVICE**

(30) Priority: 09.10.2012 CN 201210379448
(71) Applicant: ZTE Corporation, Shenzhen, Guangdong 518057 (CN)
(72) Inventor: LIN, Youchong, Shenzhen Guangdong 518057 (CN)
(74) Representative: Deambrogi, Edgardo
(86) International application number: PCT/CN2013/082576
(87) International publication number: WO 2014/056364

(57) **Abstract**

A method and device for displaying links are provided. The method includes: when an input medium is moved to a link area displayed on a terminal screen, the terminal determines all the links within a predetermined range from a touch point of the input medium on the screen, and determines the number of the links within the predetermined range; and displays the links within the predetermined range in a preset display mode according to the number of the links. In the present invention, by displaying all the links, which within the predetermined range from the link that the user want to click, in a preset display mode which facilitates the user in clicking, the user can conveniently select the truly to-be-clicked link in the amplified area, thereby avoiding a wrong clicking, and the operation is simple, which brings a pleasant user experience.

## Description

### Technical field

The present invention relates to the field of communication, in particular to a method for displaying link and device.

### Background art

With the development of communication technology and the coming of 3G era, more and more mobile terminals are equipped with a touch-sensitive screen, and mobile networking has become a part of our lives. When browsing a webpage by using a terminal with a touch-sensitive screen, because of the small size of the screen, a plurality of links will appear in a small area on the screen sometimes, the situation of clicking a wrong link would easily occur due to the relatively large size of a human finger.

At present, the solution for solving this problem is to improve the accuracy of link selection by zooming out a partial area.

However, in the above solution the user has to conduct a zooming out operation each time, so as to enlarge the target link area. While a zooming in operation has to be performed after the new link is opened, in order to restore the original reading state. Therefore, the operation is complicated, which makes for an unpleasant user experience.

### Summary

A method and device for displaying link are provided in the embodiments of the present invention, so as to at least solve the problem in the related art that if a plurality of links appear in a small area on a screen at the same time, the user needs to perform a zooming out operation, and then perform a zooming in operation after a new link is opened to restore the original reading state, rendering complicated operations and low user experience.

According to an aspect of the embodiments of the present invention, a method for displaying link is provided. The method includes: when an input medium is moved to a link area displayed on a terminal screen, a terminal determines all the links within a predetermined range from a touch point of the input medium on the screen, and determines the number of the links within the predetermined range; and displays the links within the predetermined range in a preset display mode according to the number of the links.

Preferably, before when an input medium is moved to a link area displayed on a terminal screen, a terminal determines all the links within a predetermined range from a touch point of the input medium on the screen, and determines the number of the links within the predetermined range, the method further includes: the terminal receives information about a webpage; the terminal parses the information about the webpage and displays the webpage; and the terminal stores information about all the links on the webpage, wherein the information about the links includes at least one of the following: position information about the links on the terminal screen, a title and a target universal resource locator (URL for short).

Preferably, after the terminal stores information about all the links on the webpage, the method further includes: the terminal monitoring the operation of the input medium on the terminal screen.

Preferably, the step of displaying the links within the predetermined range in a preset display mode according to the number of the links includes: the terminal displays the links within the predetermined range in the preset display mode when the number of the links in the predetermined range is larger than 1.

Preferably, after the step of displaying the links within the predetermined range in a preset display mode according to the number of the links, the method further includes: the terminal determines that the input medium has completed the operation of clicking a link, or has left the screen of the terminal; and the terminal closes the link displayed in the preset display mode.

According to another aspect of the embodiments of the present invention, provided is a device for displaying link, and the device is applicable to a mobile terminal. the device includes: a first determination module, configured to, when an input medium is moved to a link area displayed on a terminal screen, determine all the links within a predetermined range from a touch point of the input medium on the screen, and determine the number of the links within the predetermined range; and a first display module, configured to display the links within the predetermined range in a preset display mode according to the number of the links.

Preferably, the device further includes: a receiving module, configured to receive webpage information; parsing module, configured to parse the webpage information; a second display module, configured to display the webpage; a storage module, configured to store information about all the links on the webpage, wherein the information about the links includes at least one of the following: position information about the links on the terminal screen, a title and a target universal resource locator (URL).

Preferably, the device further includes: a monitoring module configured to monitor the operation of the input medium on the terminal screen.

Preferably, the first display module includes: a display unit configured to display the links within the predetermined range in the preset display mode when the number of the links in the predetermined range is larger than 1.

Preferably, the device further includes: a second determination module configured to determine that the input medium has completed the operation of clicking a link, or has left the screen of the terminal; and a closing module configured to close the link displayed in the preset display mode.

In the embodiments of the present invention, by displaying all the links, which within the predetermined range from the link that the user want to click, in a preset display mode which facilitates the user in clicking, the user can conveniently select the right link in the amplified area, thereby avoiding a wrong clicking, and the operation is simple, which brings a pleasant user experience.

### Brief description of the drawings

Drawings, provided for further understanding of the disclosure and forming a part of the specification, are used to explain the disclosure together with embodiments of the disclosure rather than to limit the disclosure. In the drawings:
Fig. 1 shows a flowchart of a method for displaying link according to an embodiment of the present invention;
Fig. 2 shows a structural diagram of a device for displaying link according to an embodiment of the present invention;
Fig. 3 shows structural diagram 1 of a device for displaying link according to a preferred embodiment of the present invention;
Fig. 4 shows structural diagram 2 of a device for displaying link according to a preferred embodiment of the present invention;
Fig. 5 shows a schematic structural diagram of a link display system according to a preferred embodiment of the present invention; and
Fig. 6 shows a schematic diagram of link display according to a preferred embodiment of the present invention.

### Detailed Description of the Embodiments

Note that the embodiments of the disclosure and the features of the embodiments can be combined with each other if there is no conflict. The embodiments of the present invention will be explained below with reference to the drawings and in conjunction with the embodiments in detail.

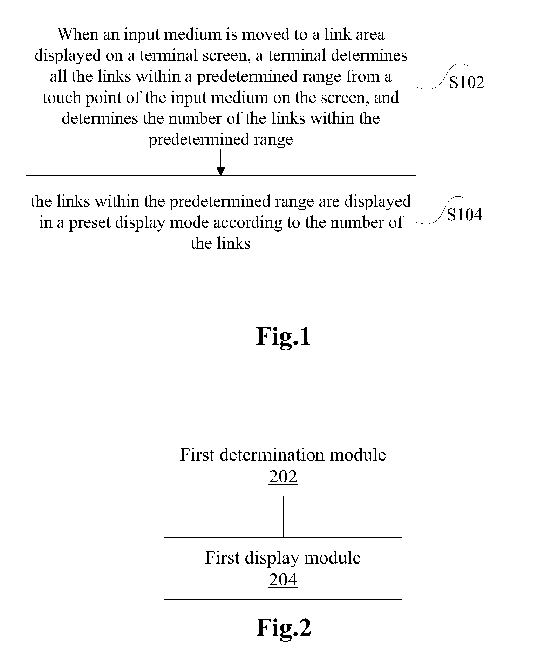

A method for displaying link is provided in the embodiments of the present invention. Fig. 1 is a flowchart of the method for displaying link according to an embodiment of the present invention, and as shown in Fig. 1, the method includes Step S 102 to Step S 104 as follows.

Step S102, when an input medium is moved to a link area displayed on a terminal screen, a terminal determines all the links within a predetermined range from a touch point of the input medium on the screen, and determines the number of the links within the predetermined range; and
step S104, the links within the predetermined range in a preset display mode are displayed according to the number of the links.

In the related art, if a plurality of links appears in a small area on a screen at the same time, the user needs to perform a zooming out operation, and has to perform a zooming in operation when a new link is opened, so as to restore the original reading state, rendering complicated operations and low user experience. In the embodiments of the present invention, by displaying all the links within the predetermined range of the to-be-clicked link of a user in a preset display mode which facilitates the user in clicking, the user can conveniently select the truly to-be-clicked link in the amplified area, thereby avoiding a wrong clicking condition; in addition, the operation is simple, and the user experience is improved.

It should be noted that the predetermined range can be a circular range with a radius of R (which can be set by oneself) and a certain point of the link as the centre of the circle, and can also be a square range or a rectangular range or the like with a certain length surrounding a certain point of the link as the centre. For the purpose of the user clicking a link accurately, the predetermined display mode can be various display modes, for example, an icon or a list.

When there is a plurality of links on a currently displayed interface, in order to determine other links around some link, it is required to store relevant information about all the links on the current page. Before step S102, the method further includes: the terminal receives information about a webpage; the terminal parses the information about the webpage and displaying the webpage; and the terminal stores information about all the links on the webpage, wherein the information about the links includes at least one of the following: position information about the links on the terminal screen, a title and a target universal resource locator (URL). The position information about the link includes a coordinate position of some point of the link with respect to the terminal screen and the length and width of the link itself.

After the terminal stores information about all the links on the webpage, the method further includes: the terminal monitoring the operation of the input medium on the terminal screen. In this preferred embodiment, by monitoring the operation of the user at any time, the terminal can acquire the user's needs in time, so as to display the required links in some area to the user, which is convenient for the user to make a selection and the implementation thereof is simple.

Preferably, step S104 includes: displaying the links within the predetermined range in the preset display mode when the number of the links in the predetermined range is larger than 1. If the number of links in the predetermined range is not greater than 1, that is, there is only one link or on link in the area, now there is no need to display the link in the area, because the user can accurately click the only link or the user does not need to click any link.

In a preferred implementation, after the step of displaying the links within the predetermined range in a preset display mode according to the number of the links, the method further includes: the terminal determines that the input medium has completed the operation of clicking a link, or has left the screen of the terminal; and the terminal closes the link displayed in the preset display mode. In this preferred implementation, when determined that the user has clicked a link which needs to be clicked thereby, the terminal enters the next page; or when the user gives up clicking the link and the input medium of the user has left the terminal screen, the terminal closes the interface on which a plurality of links are displayed, so as to avoid affecting the webpage browsing of the user. A timing closure mode can also be adopted (for example, a timing of 10 seconds, the interface on which a plurality of links are displayed is closed irrespective of whether the user has clicked a required link after 10 seconds), and of course, the closure method in the previous preferred implementation enables better user experience compared with the method of timing closure.

Also provided in the embodiments of the present invention is a device for displaying link, applicable to a terminal, and the device for displaying link can be configured to realize the previous method for displaying link. Fig. 2 shows a structural diagram of a device for displaying link according an embodiment of the present invention; and as shown in Fig. 2, the device for displaying link includes a first determination module **202** and a first display module **204.** The structure thereof is described in details below.

The first determination module **202** is configured to, when an input medium is moved to a link area displayed on a terminal screen, determine all the links within a predetermined range from a touch point of the input medium on the screen, and determine the number of the links within the predetermined range; and the first display module **204** connected to the first determination module **202** is configured to display the links within the predetermined range in a preset display mode according to the number of the links.

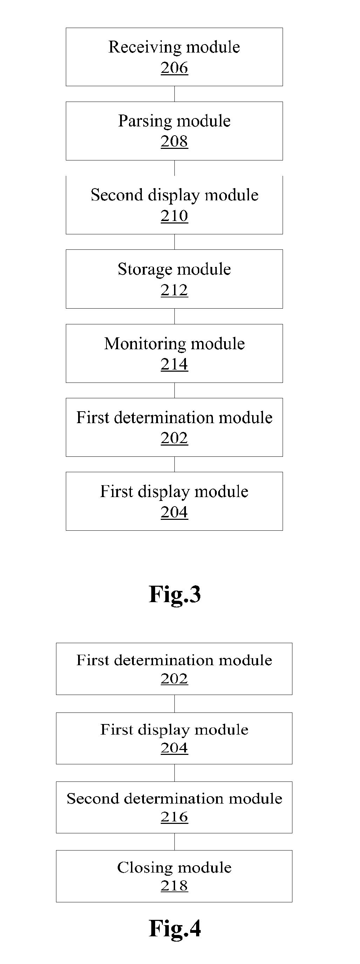

As shown in Fig. 3, the device further includes: a receiving module **206** configured to receive webpage information; a parsing module **208,** connected to the receiving module **206,** configured to parse information about a webpage received by the parsing module **206;** a second display module **210,** connected to the parsing module **208,** configured to display the webpage; a storage module **212,** connected to the second display module **210,** configured to store information about all the links on the webpage displayed by the second display module **210,** wherein the information about the links includes at least one of the following: position information about the links on the terminal screen, a title and a target URL; and a monitoring module **214,** connected to the storage module **212,** configured to monitor the operation of the input medium on the terminal screen.

Preferably, the first display module **204** includes: a display unit configured to display the links within the predetermined range in the preset display mode when the number of the links in the predetermined range is larger than 1.

As shown in Fig. 4, the device further includes: a second determination module **216,** connected to the first display module **204,** configured to determine that the input medium has completed the operation of clicking a link, or has left the screen of the terminal; and a closing module **218,** connected to the second determination module **216,** configured to close the link displayed according to the preset display mode.

In practical application, the existing terminal browser can be remade, and the function of the terminal browser can be enhanced by means of a plugin, so as to realize the solution stated above.

It should be noted that the device for displaying link described in the device embodiments corresponds to the method embodiments, with the specific implementation described in the method embodiment in detail, thereby needing no further description.

It can be seen from the description above that, in the embodiments of the present invention, when an input medium (which can be a finger or a stylus or the like) is moved to a link area, the terminal browser calculates all the links in a certain range around the touch point as candidate links. If the number of candidate links is greater than 1, it indicates that the link displayed in this area is intensive, then reorganization is performed in a suitable area above or below the input medium, and a zooming out operation is performs for display; thus, the user can select the link which the user really desires to click in this zoomed out area, the situation of clicking the wrong link is avoided, the user experience is improved, and the user operation is simple.

In order to make the technical solution of the embodiments of the present invention more clear, the implementation process thereof will be described in detail in combination with preferred embodiments below.

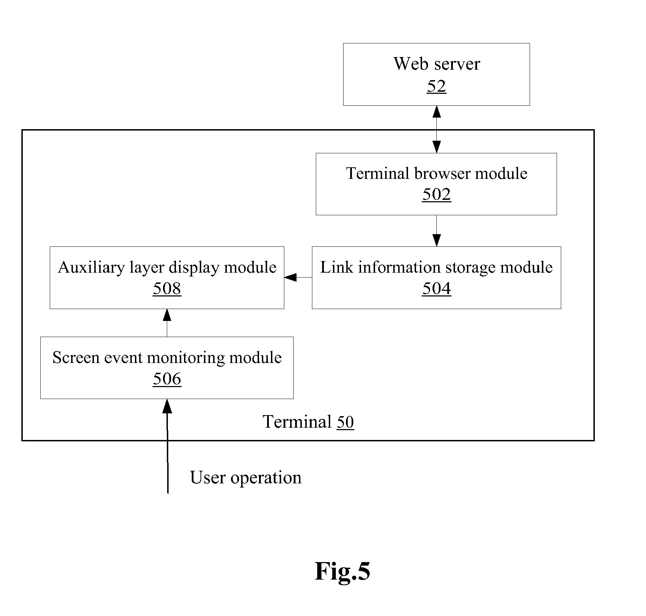

In a first preferred embodiment, the device for displaying link can also be realized with the following modules: a terminal browser module **502,** a link information storage module **504,** a screen event monitoring module **506** and an auxiliary layer display module **508.** The function of the various modules stated above is described in combination with Fig. 5 below.

Fig. 5 shows a schematic structural diagram of a link display system according a preferred embodiment of the present invention; and as shown in Fig. **5****,** the system includes: a terminal **50** and a Web server **52,** wherein the terminal **50** includes the terminal browser module **502,** the link information storage module **504,** the screen event monitoring module **506** and the auxiliary layer display module **508.**

The terminal browser module **502** (which realizes the function of the receiving module **206,** the parsing module **208** and the second display module **210** mentioned above) is responsible for sends the Hypertext Transfer Protocol (HTTP for short) to request to acquire a Hypertext Markup Language (HTML for short) text, and a picture, and shows the functions of an ordinary webpage browser such as an HTML effect.

The link information storage module **504** (which realizes the function of the storage module **212** stated above) is responsible for storing position information about all the links on the current webpage.

The screen event monitoring module **506** (which realizes the function of the monitoring module **214** stated above) is responsible for monitoring the operation of a user, and feeding back a current operation instruction to the auxiliary layer display module **508.**

The auxiliary layer display module **508** (which realizes the function of the first determination module **202,** the first display module **204,** the second determination module **216** and the closing module **218)** exhibits all the links in the current area on an auxiliary according to the operation instruction fed back by the screen event monitoring module **506,** or hides the auxiliary layer when there is no link in the current area.

Based on the device for displaying link, the flow of the user accurately selecting a link that he or she wants is stated in brief as follows:
1. The terminal browse module **502** sends an HTTP request, and fetches back an HTML text and related resources.
2. The terminal browser module **502** parses the HTML text and displays a webpage, and when exhibiting each link, writes information such as position information about the link, the title and the target URL into the link information storage module **504.**
3. The user browses the webpage, and the screen event monitoring module **506** feeds back operation information to the auxiliary layer display module **508** when monitoring that the input medium of the user (a finger or stylus of the user) is operating at the position (x, y) on the screen.
4. The auxiliary layer display module **508** receives the operation instruction, and obtains information about all the candidate links in the range, with R as a radius and (x, y) as the centre by querying the link information storage module **504.** When the number of candidate links is smaller than or equal to 1, the auxiliary layer is hidden; and when the number of the candidate links is larger than 1, the auxiliary layer display module **508** exhibit the candidate links anew in the form of an icon or list for the user to select, and when the user selects a link, it is opened by the webpage browser, and it returns to step1.
5. When the input medium of the user has left the screen the screen event monitoring module **506** feeds back the leaving event to the auxiliary layer display module **508,** and the auxiliary layer display module **508** hides the auxiliary layer.

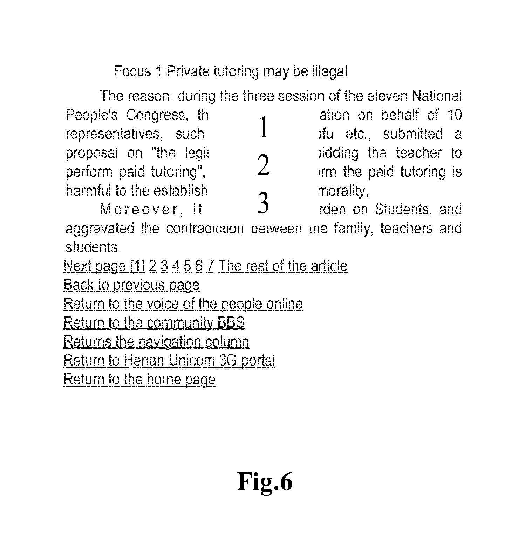

Fig. 6 shows a schematic diagram of link display according a preferred embodiment of the present invention, and the flow of the user accurately selecting a link that he or she wants is described in detail in combination with Fig. 6.
1. The terminal browse module **502** sends an HTTP request, and fetches back an HTML text and related resources, wherein the related resources include a picture file, a format file and so on.
2. The terminal browser module **502** parses the HTML text and displays a webpage, and when exhibiting each link, writes information such as position information about the link, the title and the target URL into the link information storage module **504,** wherein the position information about the link includes the coordinate position of a certain point of the link in respect of the terminal screen and the width and height of the link per se. For example, the position information about a link can be the vertical distance x and horizon distance y of the upper-lift corner of the link away from the upper-left corner of the screen, denoted by (x, y), and also includes the width (w) and height (h) of the link *per se*; and the position information about the link can also be the vertical distance x of the central position of the link away from the upper edge of the screen, and the horizontal distance y of the central position of the link sway from the left edge of the screen or the right edge of the screen, denoted by (x, y), and also includes the width (w) and height (h) of the link *per se.* Of course, the position information about the link is no way limited to the examples above, if only other links in a certain range around a link can be determined according to the position information, then the position information is in the scope of protection of the present invention.
3. The user browses the webpage, and the screen event monitoring module **506** monitors the operation of the user and feeds back operation information to the auxiliary layer display module **508** when monitoring that the input medium (a finger or stylus of the user) is operating at the position (x, y) on the screen.
   Common user operations include: single click, double click and long press a target touch; and the system can ignore some operations, for example, when long pressing a target touch point, the system does not feed back an operation event to the auxiliary layer display module **508,** but performs a default operation of the browser (for example, popping up a menu).
4. The auxiliary layer display module **508** obtains information about all the candidate links in the range, with R as a radius and (x, y) as the centre by querying the link information storage module **504.**
   When the number of candidate links is smaller than or equal to 1, the auxiliary layer is hidden; and when the number of candidate links is larger than 1, the auxiliary layer display module **508** display the candidate links in a preset display mode convenient for the user accurately clicking the links, for example, displaying the candidate links anew by means of icons or a list. It should be noted that there can be various ways to display the candidate links anew, for the purpose of being convenient for the user to select.
   As shown in Fig. 6, when the user has finished reading the current page and wants to enter the next page (i.e. page 2), since a plurality of links are displayed in a small area, for example, 1, 2, 3, 4, etc., when the input medium of the user moves to 2, displaying the links 1, 2 and 3 on the screen anew by means of the steps stated above, being convenient for the user to click the link required thereby accurately.
   After the user selects a link, the link is opened by the webpage browser, and step 1 is returned to.
5. When the input medium of the user has left the screen the screen event monitoring module **506** feeds back the leaving event to the auxiliary layer display module **508,** and the auxiliary layer display module **508** hides the auxiliary layer, thus avoiding the effect on the webpage browsing of the user.

It should be noted that the steps shown in the flowchart of the drawings can be executed, for example, in a computer system with a set of instructions executable by a computer, in addition, a logic order is shown in the flowchart, but the shown or described steps can be executed in a different order under some conditions.

In summary, according to the previous embodiments of the present invention, by displaying all the links within the predetermined range of the to-be-clicked link of a user in a preset display mode which facilitates the user in clicking, the user can conveniently select the truly to-be-clicked link in the amplified area, thereby avoiding a wrong clicking condition; in addition, the operation is simple, and the user experience is improved. It should be noted that the method for displaying link in the embodiments of the present invention can also be used in the case where there are a plurality of links in a small area in a multimedia message (e.g. a mobile phone newspaper).

Obviously, those skilled in the art shall understand that the above-mentioned modules and steps of the embodiments of the present invention can be realized by using general purpose calculating device, can be integrated in one calculating device or distributed on a network which consists of a plurality of calculating devices. Alternatively, the modules and the steps of the disclosure can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the embodiments of the present invention are not restricted to any particular hardware and software combination.

The descriptions above are only the preferable embodiment of the disclosure, which are not used to restrict the disclosure, for those skilled in the art, the disclosure may have various changes and variations. Any amendments, equivalent substitutions, improvements, etc. within the principle of the disclosure are all included in the scope of the protection of the disclosure.

### Industrial Applicability

The technical solution of the embodiments of the present can be applied to the field of webpage browsing on touch-screen terminals, by displaying all the links, which within the predetermined range from the link that the user want to click, in a preset display mode which facilitates the user in clicking, the user can conveniently select the right link in the amplified area, thereby avoiding a wrong clicking. Moreover, the operations are simple, which bring a pleasant user experience.

## Claims

1. A method for displaying links, **characterized by** comprising:
when an input medium is moved to a link area displayed on a screen of a terminal, the terminal determining all the links within a predetermined range from a touch point of the input medium on the screen, and determining the number of the links within the predetermined range; and
displaying the links within the predetermined range in a preset display mode according to the number of the links.

2. The method according to claim 1, **characterized in that** the method, before when an input medium is moved to a link area displayed on a terminal screen, a terminal determining all the links within a predetermined range from a touch point of the input medium on the screen, and determining the number of the links within the predetermined range, further comprises:
the terminal receiving information about a webpage;
the terminal parsing the information about the webpage and displaying the webpage; and
the terminal storing information about all the links on the webpage, wherein the information about the links comprises at least one of the following: position information about the links on the screen of the terminal, a title and a target universal resource locator (URL).

3. The method according to claim 2, **characterized in that** after the terminal storing information about all the links on the webpage, the method further comprises:
the terminal monitoring the operation of the input medium on the terminal screen.

4. The method according to claim 1, **characterized in that** displaying the links within the predetermined range in a preset display mode according to the number of the links comprises:
displaying the links within the predetermined range in the preset display mode when the number of the links in the predetermined range is larger than 1.

5. The method according to claim 1, **characterized in that** after displaying the links within the predetermined range in a preset display mode according to the number of the links, the method further comprises:
the terminal determining that the input medium has completed the operation of clicking a link, or has left the screen of the terminal; and
the terminal closing the link displayed in the preset display mode.

6. A device for displaying links, applicable to a terminal, **characterized by** comprising:
a first determination module, configured to, when an input medium is moved to a link area displayed on a terminal screen, determine all the links within a predetermined range from a touch point of the input medium on the screen, and determine the number of the links within the predetermined range; and
a first display module, configured to display the links within the predetermined range in a preset display mode according to the number of the links.

7. The device according to claim 6, **characterized in that** the device further comprises:
a receiving module configured to receive information about a webpage ;
a parsing module configured to parse the information about the webpage;
a second display module configured to display the webpage;
a storage module configured to store information about all the links on the webpage, wherein the information about the links comprises at least one of the following: position information about the links on the terminal screen, a title and a target universal resource locator (URL).

8. The device according to claim 7, **characterized in that** the device further comprises:
a monitoring module configured to monitor the operation of the input medium on the terminal screen.

9. The apparatus according to claim 6, **characterized in that** the first display module comprises:
a display unit configured to display the links within the predetermined range in the preset display mode when the number of the links in the predetermined range is larger than 1.

10. The device according to claim 6, **characterized in that** the device further comprises:
a second determination module configured to determine that the input medium has completed the operation of clicking a link, or has left the screen of the terminal; and
a closing module configured to close the link displayed in the preset display mode.
